(19) Europäisches Patentamt / European Patent Office / Office européen des brevets

(11) **EP 2 187 552 A1**

(12) **EUROPEAN PATENT APPLICATION**
published in accordance with Art. 153(4) EPC

(43) Date of publication:
**19.05.2010 Bulletin 2010/20**

(51) Int Cl.:
*H04J 11/00* (2006.01)      *H04B 7/005* (2006.01)

(21) Application number: **08828779.2**

(22) Date of filing: **28.08.2008**

(86) International application number:
**PCT/JP2008/065370**

(87) International publication number:
**WO 2009/028589 (05.03.2009 Gazette 2009/10)**

(84) Designated Contracting States:
**AT BE BG CH CY CZ DE DK EE ES FI FR GB GR HR HU IE IS IT LI LT LU LV MC MT NL NO PL PT RO SE SI SK TR**
Designated Extension States:
**AL BA MK RS**

(30) Priority: **28.08.2007   JP 2007221367**

(71) Applicant: **Sharp Kabushiki Kaisha**
**Osaka-shi, Osaka 545-8522 (JP)**

(72) Inventor: **The designation of the inventor has not yet been filed**

(74) Representative: **Müller - Hoffmann & Partner**
**Patentanwälte**
**Innere Wiener Strasse 17**
**81667 München (DE)**

(54)    **COMMUNICATION APPARATUS**

(57)    When in-phase data with an amplitude of 1 is located in each subcarrier, the envelope waveform of a time domain signal contains guard band 304 in an IDFT processing band. Thus, the waveform is such that a side lobe 306 is widely extended around the position of a point in time 0, as shown in Figure 3(c). To allow the side lobe 306 to be suppressed, the amplitude of each band end of a transmission spectrum is smoothly reduced. Then, in a communication apparatus, the extension of the waveform on a time domain can be reduced by optimizing the spectrum of auxiliary pilot subcarriers.

FIG. 3

**Description**

Technical Field

The present invention relates to a communication apparatus, and in particular, to a propagation channel estimation technique for OFDM communication apparatuses.

Background Art

In recent years, much effort has been made to study OFDM communication techniques. When an OFDM signal is received, a frequency equalization process is executed before a demodulation process in order to eliminate the adverse effects of a propagation channel. Propagation channel information is required for the frequency equalization process.

The following method is generally used to obtain propagation channel information. A transmitter transmits a known pilot symbol. A receiver converts the received pilot symbol into a frequency domain signals. The frequency domain signals change into a frequency response divided by a code used in the transmission. Thus, a frequency response is obtained from the propagation channel.

However, according to the above-described method, a noise component contained in the pilot symbol is contained in the frequency responsesimilarly. The noise component thus directly affects the accuracy of the demodulation. In particular, in QAM (Quadrature Amplitude Modulation) modulation, noise in an amplitude direction degrade demodulation performance and cause problems.

A time window method (also called a DFT (Discrete Fourier Transformation) method) is a technique to reduce the noise contained in the frequency response. According to the time window method, frequency/time conversion means (which is normally IDFT (Inverse Discrete Fourier Transformation)) is used to convert the frequency response into an impulse response on a time domain. A time filter such as a time window is thus used to reduce or remove time domain signals other than those containing effective delay waves. Then, time/frequency conversion means (which is normally the DFT) is used to convert the resultant signal into a frequency domain signal to obtain a frequency response with the noise reduced.

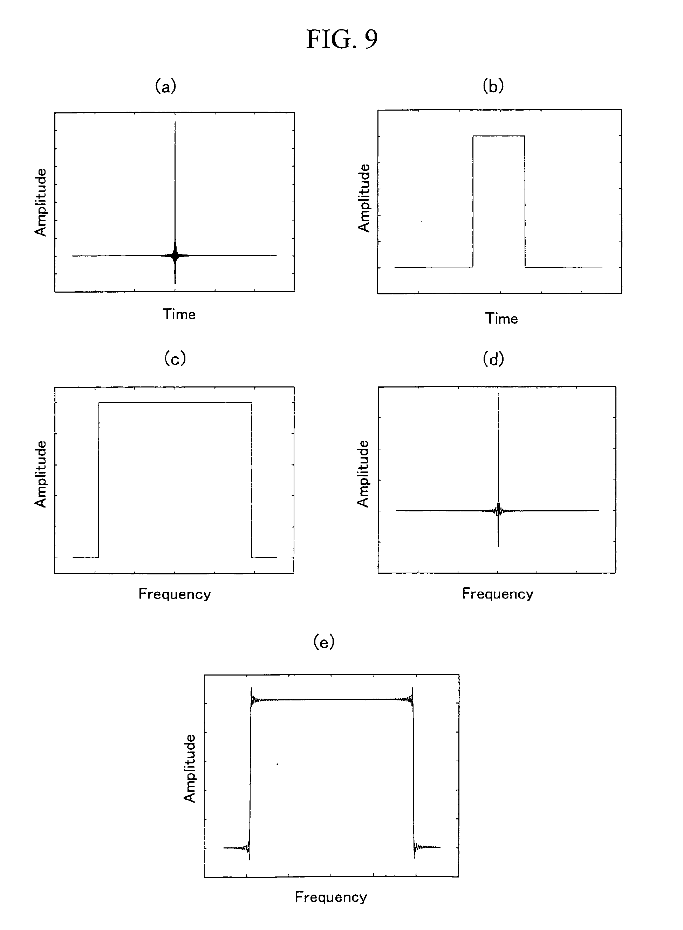

This method is excellent in the capability of reducing noise by an amount corresponding to the power reduced by the time filter. However, if DFT/IDFT processing points fail to match the number of subcarriers in the signal as in the case where guard bands are contained in the signal on the grounds, for example, the performance of an analog filter, the time filter process may disadvantageously cause the edges of a signal band to be distorted. With reference to Figure 9, the principle of generation of distortion will be described. Here, for simplification of description, it is assumed that when the pilot signal is expressed as a signal on the frequency domain, the signal band has an amplitude of 1, the guard bands have an amplitude of zero, and all the subcarriers are in phase. Figure 9(a) shows the waveform of the pilot symbol on the time domain. It is also assumed that a rectangular window is used as a time filter and that the waveform of the time window on the time domain is as shown in Figure 9(b). This time window processing corresponds to the multiplication of the waveform shown in Figure 9(a) by the waveform shown in Figure 9(b). This in turn corresponds to cutoff of a part of a widely extended impulse waveform shown in Figure 9(a), resulting in loss of information in the original signal.

The time window processing is considered to be a process on the frequency domain. A multiplication process on the time domain is equivalent to a convolution process on the frequency domain. Figure 9(c) shows the spectrum of the pilot symbol, Figure 9(d) shows the spectrum of the time window, and Figure 9(e) shows a waveform corresponding to the convolution of the two spectra. As shown in Figure 9(e), an amplitude not contained in the spectrum of the original pilot symbol is added to each of the ends of the band. This may result in distortion during propagation channel estimation.

As a method for reducing the distortion, addition of an auxiliary pilot subcarrier to the pilot signal during transmission has been proposed (see Non-Patent Document 1 described below).

A method for adding the auxiliary pilot subcarrier to the pilot signal before transmission as shown in Non-Patent Document 1 will be described below in brief.

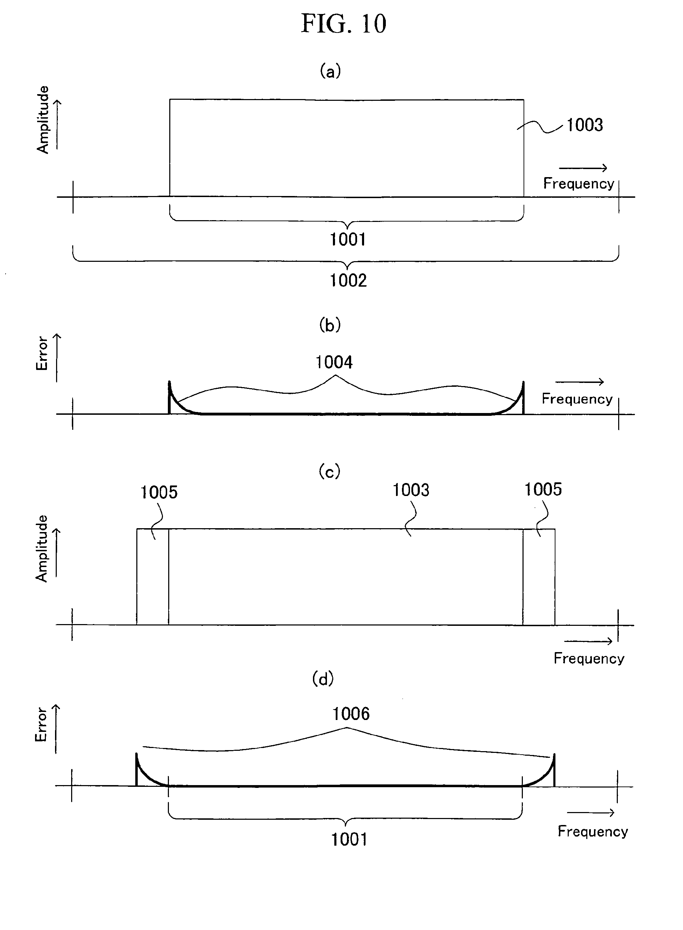

Figure 10(a) is a diagram schematically showing the spectrum of the assumed system. In Figure 10(a), reference numeral 1001 denotes a band used by data symbols. Reference numeral 1002 denotes a band to undergo DFT/IDFT. In this system, when the propagation channel is estimated by the DFT method using a pilot symbol 1003 with a uniform amplitude all over the band used by data symbols, the band edges are distorted, thus reducing the accuracy of estimation of the band edges as shown in Figure 10(b).

However, as shown in Figure 10(c), when the pilot symbol 1003 is transmitted with an auxiliary pilot subcarrier 1005 added to each of the opposite band edges of the pilot symbol 1003 and the receiver executes the DFT method on the pilot symbol 1003, including the auxiliary pilot subcarriers 1005, the resultant distortion moves to both end of the auxiliary pilot subcarriers. Thus, as shown in Figure 10(d), a propagation channel estimation error moves to the outside of the signal band 1001 (see reference numeral 1006). Consequently, the accuracy of propagation channel estimation for the signal band 1001 is improved.

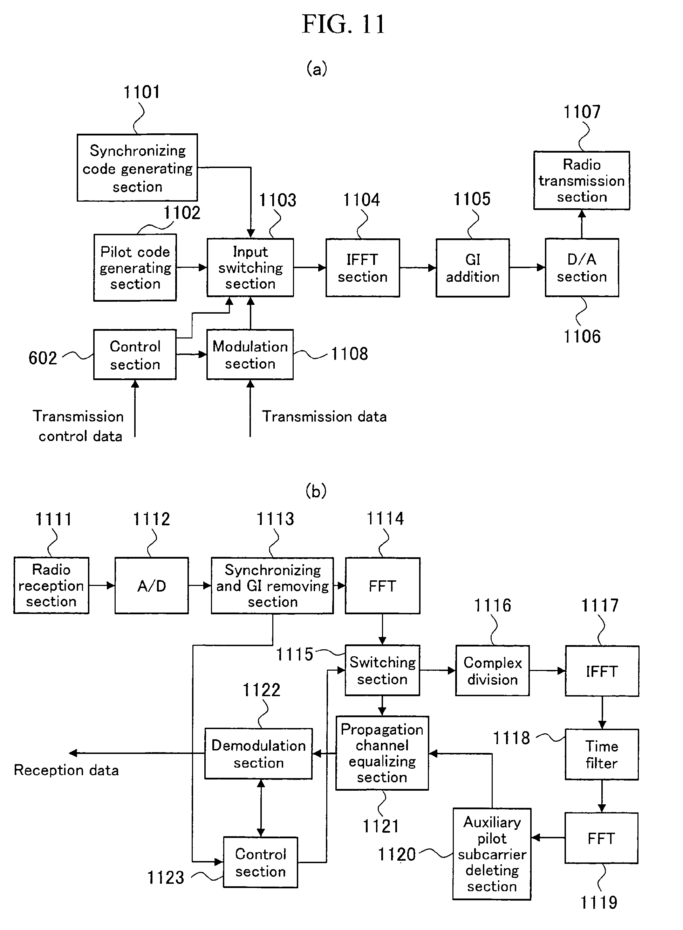

Figure 11 is a diagram showing an example of the configuration of a transmitter and a receiver both configured to implement the above-described method. Figure 11(a) shows a transmitter apparatus, and Figure 11(b) shows a receiver apparatus. A DFT/IDFT process requires a large amount of arithmetic operation. Thus, instead of the DFT/IDFT, FFT (Fast Fourier Transformation)/IFFT (Inverse Fast Fourier Transformation) is used in order to reduce the amount of arithmetic operation.

First, the transmitter apparatus will be described. Transmission signals are assumed to be of a type that is common for wireless LAN; each transmission signal contains a synchronizing symbol, a pilot symbol, and a data symbol arranged in this order. First, a control section 1109 switches an input switching section 1103 and allows an IFFT (Inverse Fast Fourier Transformation) section 1104 to transform a signal from a synchronizing code generating section 1101 into a time domain signals. A GI (Guard Interval) adding section 1105 adds guard intervals to the signal. A D/A (Digital/Analog) conversion section 1106 then converts the resultant signal into an analog signal. A radio transmission section 1107 then subjects the analog signal to frequency conversion and power amplification, and transmits the synchronizing symbol. The control section 1108 then switches the input source of the input switching section 1103 to a pilot code generating section 1102. The pilot code generating section 1102 generates codes for auxiliary pilot subcarrier and codes for a signal band. The generated pilot symbol code is processed similarly to the synchronizing symbol and transmitted as a pilot symbol.

Subsequently, after the transmission of the pilot symbol, the input switching section 1103 is switched to a modulation section 1108 to allow the succeeding data symbol to be transmitted. The modulation section 1108 is set by the control section 1109 so as to execute processing based on a predetermined modulation scheme, in accordance with transmission control data. This processing allows transmission of a signal that uses a pilot symbol with the spectrum shown in Figure 10(c).

Now, the receiver apparatus will be described. A radio reception section 1111 receives and converts radio signals into base band signals. An A/D (Analog/Digital) conversion section 1112 converts the base band signals into digital signals. A synchronizing and G/I removing section 1113 then performs symbol synchronization utilizing the pilot symbol and also removes guard intervals. Upon receiving the synchronizing symbol, the synchronizing and G/I removing section 1113 notifies a control section 1123 of the timing of the reception, which is then used to control the other blocks. The symbol with the guard intervals removed are transmitted to a first FFT section 1114, which then transforms the symbols into signal on a frequency domain. The control section 1123 performs control such that an output switching section 1115 sends the pilot symbol to a complex division section 1116, while sending the data symbol to an IFFT section 1117. The pilot symbol is subjected to a complex division process utilizing the code used for transmitting the pilot symbol. The pilot symbol is thus converted into a frequency response containing the band of the auxiliary pilot subcarrier. Then, the IFFT section 1117 transforms the frequency response into time domain signals corresponding to an impulse response. A time domain filter 1118 then removes the signal components except for time period with effective delay waves present therein, from the impulse response. A second FFT section 1119 then transforms the impulse response into a frequency response again. Thereafter, an auxiliary pilot subcarrier deleting section 1120 removes the components of the band of the auxiliary pilot subcarrier added during transmission, from the frequency response. The auxiliary pilot subcarrier deleting section 1120 inputs the resultant signal to a propagation channel correcting section 1121 as a frequency response from the signal band. The propagation channel equalizing section 1121 then uses the frequency response from the signal band to equalize the data symbol. A demodulation section 1122 then demodulates the equalized data symbol.

The above-described operation enables communication that utilizes propagation channel estimation based on the DFT method with distortion of the signal band reduced. Non-Patent Document 1:"Discussion of Distortion in Propagation Channel Estimation Based on the Time Window Method" Conference of the Institute of Electronics, Information and Communication Engineers in 2006, B-5-93

Disclosure of the Invention

Problems to be Solved by the Invention

The above-described method of adding the auxiliary pilot subcarrier to the pilot symbol is excellent in reducing the distortion of the signal band resulting from the DFT method.

However, the spectrum of the pilot symbol with the auxiliary pilot subcarrier added is shaped like a rectangle similar to the waveform shown in Figure 9(c). Thus, the waveform of the pilot symbol disadvantageously remains somewhat widely extended on the time domain.

An object of the present invention is to optimize the spectrum of the auxiliary pilot subcarrier in the communication apparatus to reduce the wide extension of the waveform on the time domain. Another object is to reduce the distortion.

Means for Solving the Problems

An aspect of the present invention provides a radio communication system in which an OFDM transmission apparatus add auxiliary pilot subcarrier to outsides of a signal band of a pilot signal and in which an OFDM reception apparatus carries out propagation channel estimation involving the auxiliary pilot subcarriers, in accordance with the time window method, the radio communication system comprising a gain adjusting section configured to carry out attenuation in accordance with an attenuation characteristic adapted to reduce an amplitude of the subcarrier with increasing distance from the signal band.

The present invention also provides a radio communication system in which an OFDM transmission apparatus adds auxiliary pilot subcarriers to outsides of a signal band of a pilot signal and in which an OFDM reception apparatus receives the pilot signal with the auxiliary pilot subcarrier added, subjects the received pilot symbol to a time/frequency conversion, subjects the signal resulting from the time/frequency conversion to a complex division utilizing a code used in transmission, subjects the signal resulting from the complex division to a frequency/time conversion, executes time filter processing by reducing or removing an amplitude of a period of the signal resulting from the frequency/time conversion, and then subjects the signal resulting from the time filter processing to a time/frequency conversion to determine a frequency response, the radio communication system comprising a gain adjusting section configured to, for at least one of the auxiliary pilot subcarrier added by the transmission apparatus and a band of the signal resulting from the complex division in the reception apparatus, the band comprising the added auxiliary pilot subcarrier, carry out attenuation in accordance with an attenuation characteristic adapted to reduce an amplitude of the auxiliary pilot subcarrier with increasing distance from the signal band.

The attenuation characteristic is preferably a cosine function. The attenuation characteristic is preferably a function for a hamming window. Furthermore, the attenuation characteristic is preferably varied in accordance with information on a propagation channel.

In the above-described system, at least one of start position and period length of the section subjected to the time filter processing is preferably varied depending on a status of a propagation channel. In this case, the status of the propagation channel is preferably the amount of noise. Alternatively, the status of the propagation channel is preferably a delay spread. Alternatively, if the propagation channel involves little noise, the attenuation characteristic is preferably a large side lobe suppression amount. Alternatively, if the delay spread of the propagation channel is small, the attenuation characteristic preferably corresponds to a large side lobe suppression amount.

Another aspect of the present invention provides an OFDM transmission apparatus comprising a pilot code generating section configured to, during generation of a pilot symbol, generate pilot codes comprising auxiliary pilot subcarrier in at least a part of a band except a signal band, and a gain adjusting section configured to attenuate an amplitude of the auxiliary pilot subcarrier with increasing distance from the signal band. The OFDM transmission apparatus preferably further comprises a control section configured to control an attenuation characteristic of the gain adjusting section in accordance with information on propagation channels.

Furthermore, the present invention provides an OFDM reception apparatus comprising a first DFT section configured to receive a pilot symbol with auxiliary pilot subcarriers added and subject the received pilot symbol to a time/frequency conversion, a complex division section configured to subject the signal resulting from the time/frequency conversion to a complex division utilizing codes used in transmission, a gain adjusting section configured to carry out adjustment such that an amplitude of a band of the signal resulting from the complex division which band comprises the added auxiliary pilot subcarrier attenuated with increasing distance from a signal band, an IDFT section configured to subject the signal resulting from the amplitude adjustment to a frequency/time conversion, a time filter section configured to execute time filter processing by reducing or removing an amplitude of a period of the signal resulting from the frequency/time conversion, and a second DFT section configured to subject the signal resulting from the time filter processing to a time/frequency conversion. The OFDM reception apparatus preferably further comprises a control section configured to control an attenuation characteristic of the gain adjusting section in accordance with information on a propagation channel. The OFDM reception apparatus preferably further comprises a control section configured to vary at least one of start position and period length of the time filtering in accordance with the information on the propagation channel.

Another aspect of the present invention provides a communication method in which an OFDM transmission apparatus adds auxiliary pilot subcarriers to outsides of signal band of a pilot signals and in which an OFDM reception apparatus carries out propagation channel estimation involving the auxiliary pilot subcarrier, in accordance with the time window method, the radio communication method comprising: a step of carrying out attenuation in accordance with an attenuation characteristic adapted to reduce amplitude of the subcarrier with increasing distance from the signal band.

Effects of the Invention

The communication technique according to the present invention enables the spectrum of the auxiliary pilot subcarriers to be optimized to reduce the spread of the waveform on the time domain. The communication technique also has the advantage of being capable of reducing distortion of the signal.

Brief Description of the Drawings

Figure 1(a) is a function block diagram showing an example of the configuration of a transmitter according to the present embodiment of the present invention, and Figure 1(b) is a function block diagram showing an example of the configuration of a receiver.

Figure 2 is a diagram showing an example of the configuration of a frame.

Figure 3 is a diagram showing the spectrum of a pilot symbol with auxiliary pilot subcarriers added.

Figure 4(a) is a diagram showing an example of an envelope of a time domain signal obtained when a function for a hamming window is used as an example of a function with a small main lobe width and when a function for a Blackman window with a large side lobe suppression amount is used as an attenuation characteristic of the auxiliary pilot subcarriers, and Figure 4(b) is a diagram showing an example of an enlarged view of an envelope waveform near the main lobe.

Figure 5(a) is a diagram showing an example of a pilot symbol according to a first embodiment of the present invention, Figure 5(b) is a diagram schematically showing a resultant impulse response, and Figure 5(c) is a diagram schematically showing the spectrum of the pilot symbol with the auxiliary pilot subcarriers interposed.

Figure 6 is a communication apparatus according to a second embodiment of the present invention, wherein Figure 6(a) shows transmitting communication apparatus, and Figure 6(b) shows receiving communication apparatus.

Figure 7(a) is a diagram showing the normal relationship between an incoming wave and a time window, and Figure 7(b) is a diagram showing the relationship between the incoming wave and the time window observed when an SNR is high and when a delay spread is small.

Figure 8 is a function block diagram showing an example of the configuration of a receiver according to a third embodiment of the present invention.

Figure 9 is a diagram illustrating the principle of generation of distortion of the edges of a signal band as a result of time filter processing.

Figure 10 is a diagram showing a method for adding auxiliary pilot subcarriers to a pilot signal during transmission, described in Non-Patent Document 1.

Figure 11 is a diagram showing an example of the configuration of a transmitter and a receiver both configured to implement the method shown in Figure 10.

Description of Symbols

101 ... Pilot code generating section, 102 ... Gain adjusting section, 103 ... Input switching section, 104 ... Synchronizing code generating section, 105 ... Modulation section, 106 ... IFFT section, 107 ... Guard interval (GI) adding section, 108 ... D/A conversion section, 109 ... Radio transmission section, 110 ... Control section, 121 ... Radio reception section, 122 ... A/D conversion section, 123 ... Synchronizing and GI removing section, 124 ... First FFT section, 125 ... Switching section, 126 ... Complex division section, 128 ... IFFT section, 129 ... Time filter section, 130 ... Second FFT section, 131 ... Auxiliary pilot subcarrier deleting section, 132 ... Propagation channel equalizing section, 133 ... Demodulation section, 134 ... Control section.

Best Mode for Carrying Out the Invention

A communication technique according to an embodiment of the present invention will be descried with reference to the drawings. First, a communication frame structure will be described. Here, for simplification, an example with a fixed length frame will be described. However, the application of the present invention is not limited to the fixed length frame; the present invention is applicable to a variable-length frame or to communication of variable-length, asynchronous packets.

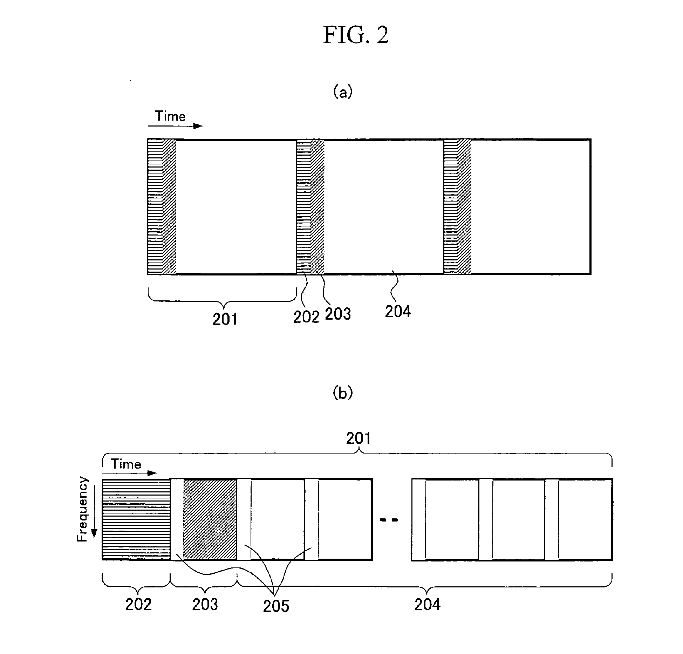

A frame used below have a fixed length in the direction of time and frequency and is repeatedly used for communication. Figure 2(a) is a diagram showing an example of the configuration of a frame. As shown in Figure 2(a), a synchronizing symbol is located at the head of the frame. A pilot symbol for propagation channel estimation is located after the synchronizing symbol. Data symbols are located after the pilot symbol. Reference numeral 201 denotes one frame. Figure 2(a) shows that the frame 201 is repeatedly transmitted. A synchronizing symbol 202 is located at the head of the frame 201. The synchronizing symbol 202 is used to indicate the head of the frame when the frame is received. The synchronizing symbol 202 is often a signal that is characteristic in the direction of the time domain. The frame may comprise a group of OFDM symbols. However, the frame can be used for signals other than OFDM signals, and will thus not be described in detail. In an example in which OFDM signals are used, a signal may be used which contains a null carrier interposed after each subcarrier so that the same signal is repeatedly used on the time domain. A pilot symbol 203 is located after the synchronizing symbol 202. Moreover, a data symbol group 204 is located after the pilot symbol 203. The detailed description of contents of the data symbol group 204 is omitted. In general, the data symbol group includes control data indicating the structures of the frame and succeeding frames and data actually used for communication.

Figure 2(b) is a diagram showing one frame in further detail. A guard interval 205 is added to each of the OFDM symbols in the frame 201. The guard interval 205 is added in order to absorb the adverse effects of delay waves. By way of example, a method for adding a part of the OFDM symbol as a cyclic prefix will be described.

A communication technique according to a first embodiment of the present invention will be described with reference to the drawings. First, the spectrum of a pilot symbol with auxiliary pilot subcarriers added, which is used in the present embodiment, will be described. The pilot symbol actually used is multiplied by a certain code on the frequency domain for whitening to use a signal with reduced PAPR. However, for simplification of description, the core for whitening is omitted.

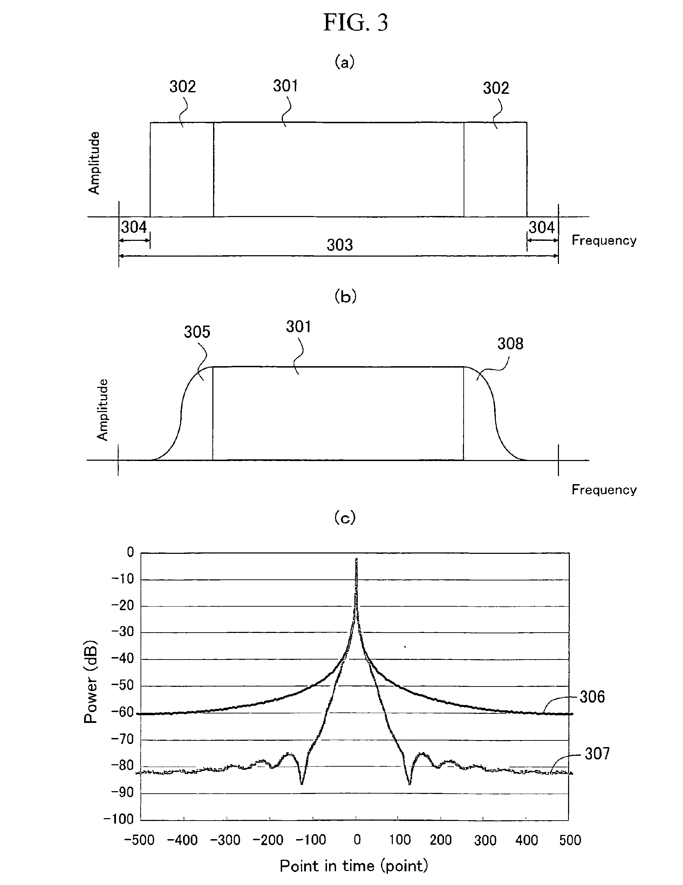

First, the spectrum of a pilot symbol that uses a conventional auxiliary pilot subcarrier and the waveform of the pilot symbol on the time domain will be described. Figure 3(a) schematically shows the spectrum of a pilot symbol that uses conventional auxiliary pilot subcarriers. Auxiliary pilot subcarrier 302 are located at both of the opposite ends of a pilot subcarriers 301 in a signal band and adjacent to the pilot subcarriers 301. A DFT/IDFT processing band is denoted by reference numeral 303. A guard band 304 in which no subcarrier is located is located at each of the opposite ends of the DFT/IDFT processing band.

It is assumed that in-phase data with an amplitude 1 is located in each of the subcarriers. Then, the envelope waveform of time signal contains the guard band 304 in an IDFT processing band. Thus, as shown in Figure 3(c), the waveform is such that a side lobe 306 is widely extended around the position of a point in time 0.

To allow the side lobe 306 to be suppressed, the amplitude of each band end of the transmission spectrum is smoothly reduced. In the present embodiment, in the band of the auxiliary pilot subcarriers, a portion adjacent to the signal band has a 100% amplitude, with the amplitude decreasing with increasing distance from the signal band. The corresponding spectrum is schematically shown in Figure 3(b). Auxiliary pilot subcarriers 305 and 308 are arranged at the respective ends of the pilot subcarriers 301 located in the signal band; each of the auxiliary pilot subcarriers 305 and 308 has an amplitude decreasing with increasing distance from the corresponding signal band end.

In connection with the degree of attenuation of the auxiliary pilot subcarriers 305 and 308, the attenuation is effective regardless of the shape of the attenuation. However, the attenuation is very effective for reducing the side lobe when the attenuation is shaped like the curve of a cosine function, a square cosine function, a high-order cosine function, or a similar curve. This is because the output waveform on the time axis is equivalent to the convolution of the waveform of a sinc function and the waveform of a pilot symbol's spectrum. The principle is the same as the reason why a time window function used for spectral analysis suppresses the side lobe.

Reference numeral 307 in Figure 3(c) denotes an example of an envelope on the time domain observed when a function in Expression (1) for a hamming window is used as an attenuation characteristic of the auxiliary pilot subcarrier.

$$[\text{Expression 1}]$$

$$w(x) = 0.42 - 0.5\cos 2\pi x$$

$$(0 \leq x < 0.5\pi \text{ or } 0.5\pi \leq x < \pi) \quad (1)$$

Figure 3(c) shows that the width of the main lobe is slightly increased but the side lobe is suppressed by at least 20 dB. The main lobe width and the side lobe suppression amount are in a tradeoff relationship. When the attenuation characteristic enables the side lobe to be suppressed, the main lobe width is increased. A reduction in main lobe width reduces the side lobe suppression amount. This also applies to a window function used for spectral analysis.

The main lobe width indicates how far the time window needs to be located from an assumed pulse position in order to prevent the performance from being degraded. The side lobe suppression amount indicates the marginal estimated accuracy in an environment with little noise, in other words, a high-SNR environment. These values vary depending on the number of subcarriers used, the assumed maximum delay time of an incoming pass, the assumed degree of noise. Thus, the values cannot flatly be determined using a particular threshold.

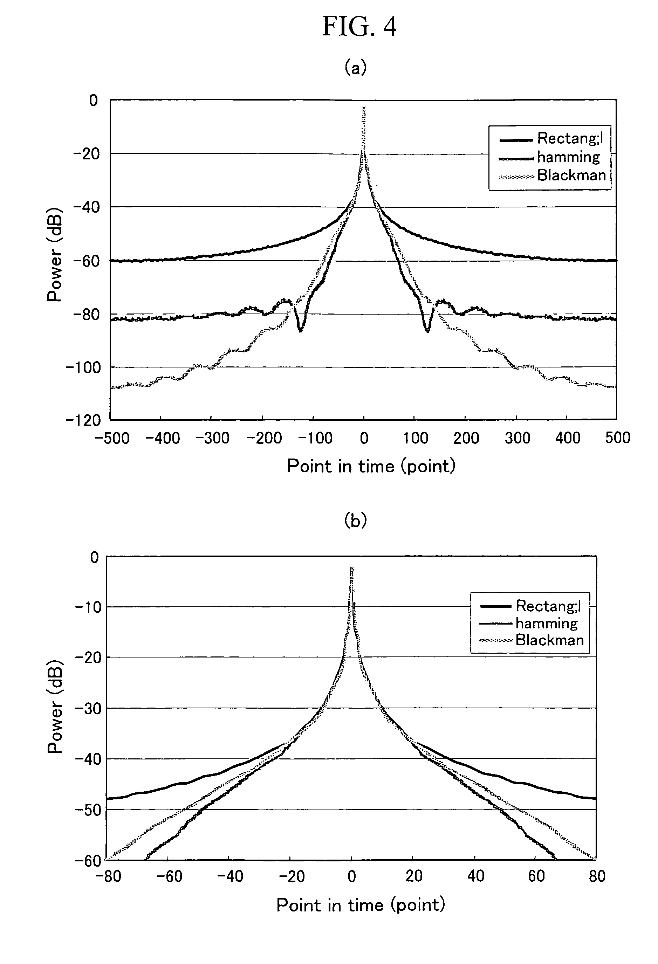

Figure 4(a) is a diagram showing an example of an envelope of a time domain signal obtained when a function for a hamming window is used as an example of a function with a small main lobe width and when a function for a Blackman window with a large side lobe suppression amount is used as an attenuation characteristic of the auxiliary pilot subcarriers. The function for the Blackman window is expressed by:

[Expression 2]

$$w(x) = 0.42 - 0.5\cos2\pi x + 0.08\cos4\pi x$$

$$(0 \leq x < 0.5\pi \text{ or } 0.5\pi \leq x < \pi) \quad (2)$$

For comparison, an envelope is also shown which is obtained when the auxiliary pilot subcarriers are used in the conventional manner, that is, when the attenuation characteristic corresponds to a rectangle.

As shown in Figure 4(a), the power of the side lobe obtained at a point sufficiently distant from the main lobe differs, by at least 40 dB, between the case where the attenuation characteristic of the auxiliary pilot subcarriers corresponds to a rectangle and the case where the function for the Blackman window is used.

Figure 4(b) shows an example of an enlarged view of an envelope waveform near the main lobe. The power obtained at a point that is distant from the waveform center by about 50 points is lowest when the function for the hamming window is used as the attenuation characteristic of the auxiliary pilot subcarriers. This indicates that if a time window is provided which spans 50 points from the waveform center, the function for the hamming window allows the largest amount of power to be accommodated within the time window.

As described above, which function maximizes propagation channel estimation accuracy depends on parameters such as the number of subcarriers and the assumed propagation environment and can thus not flatly be determined. In the description of the present embodiment, the function for the hamming window is used.

In the present embodiment, description will be given of a transmitter configured to reduce the power of the auxiliary pilot subcarrier added to both of the opposite ends of the signal band of the pilot symbol, with increasing distance from the signal band, and a receiver configured to improve the propagation channel estimation accuracy utilizing the pilot symbol with the auxiliary pilot subcarriers added.

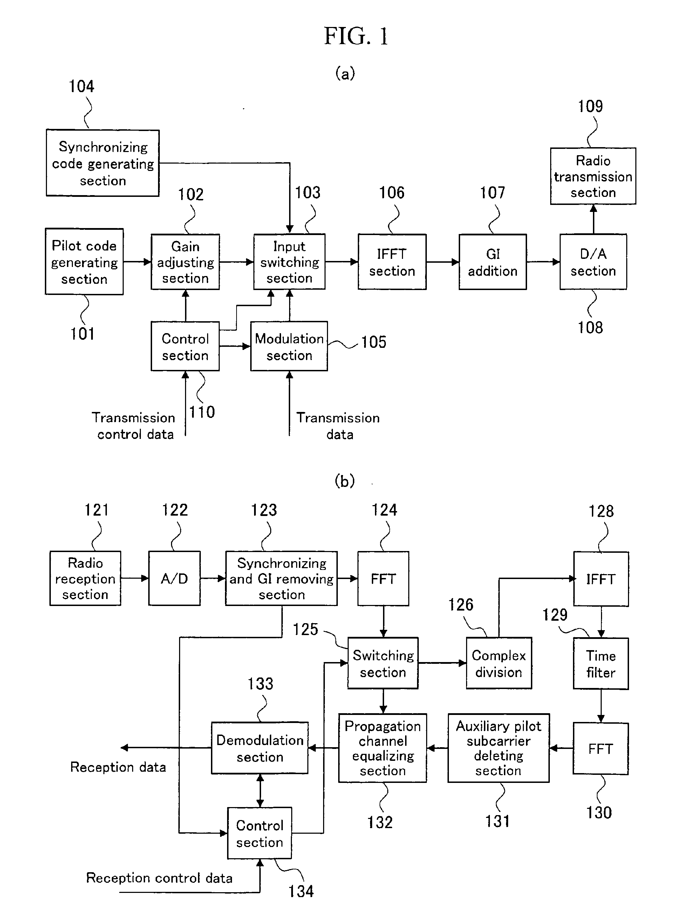

Figure 1(a) is a function block diagram showing an example of the configuration of a transmitter. Figure 1(b) is a function block diagram showing an example of the configuration of a receiver.

Reference numeral 101 denotes pilot codes generating section configured to generate a pilot signal code. Reference numeral 102 denotes a gain adjusting section configured to vary the amplitude of the pilot signal in accordance with an instruction from a control section 110 described below. Reference numeral 103 denotes an input switching section configured to switch an input to an IFFT section 105 between an output from a synchronizing signal generating section 104 and an output from a gain adjusting section 102 and an output from a modulation section 105 in accordance with an instruction from the control section 110. Reference numeral 104 denotes a synchronizing code generating section configured to generate a frame synchronizing code. Reference numeral 105 denotes a modulation section configured to modulate transmission data in accordance with an instruction from the control section 110. Reference numeral 106 denotes an IFFT section configured to subject an output from the input switching section 103 to perform IFFT. Reference numeral 107 denotes a guard interval (GI) adding section configured to add a part of an output from the IFFT section 106 as a cyclic prefix. Reference numeral 108 denotes a D/A conversion section configured to convert a digital signals into analog signals. Reference numeral 109 denotes a radio transmission section configured to convert the input signal into a frequency required to transmit a corresponding base band signals corresponding base band signals into a frequency required the transmit, amplify the power of the base band signal up to a required value, and then transmit the resultant signal through an antenna. Reference numeral 110 denotes the control section configured to control the blocks of the transmitter based on frame transmission timings and transmission control data.

Reference numeral 121 denotes a radio reception section configured to receive an radio waves through an antenna, extract a required band from the radio wave and convert the band to a base band signal. Reference numeral 122 denotes an A/D conversion section configured to convert analog signals into digital signals. Reference numeral 123 denotes a synchronizing and GI removing section configured to detect a frame synchronizing symbol in the input signals and remove guard intervals from the succeeding signals to extract OFDM symbols. Reference numeral 124 denotes a first FFT section configured to subject the input OFDM symbols to perform FFT. Reference numeral 125 denotes a switching section configured to output the input signals to one of a complex division section 126 and a propagation channel correcting section 132. Reference numeral 126 denotes the complex division section configured to subject the input signals to a complex quotient divided by a pilot symbol code used for transmission. Reference numeral 128 denotes an IFFT section configured to subject the input signal to perform IFFT. Reference numeral 129 denotes a time filter section configured to reduce and remove the power in a predetermined time period of the input time domain signal. Reference numeral 130 denotes a second FET section configured to subject the input signal to perform FFT. Reference numeral 131 denotes an auxiliary pilot subcarrier deleting section configured to set the data in the auxiliary pilot subcarriers to zero. Reference numeral 132 denotes the propagation channel equalizing section configured to equalize the data symbol input by the switching section 125, in accordance with propagation channel information output by the auxiliary pilot subcarrier deleting section 131. Reference numeral 133 denotes a demodulation section configured to demodulate the input data in accordance with a modulation scheme specified by the control section 134. Reference numeral 134 denotes a control section configured to control the blocks based on frame synchronizing timings output by the synchronizing and GI removing section.

How the blocks operate will be described below in detail. First, the operation of the transmitter will be described.

The present embodiment uses a pilot symbol with the spectrum shown in Figure 3(b). How to transmit the pilot symbol with the spectrum shown in Figure 3(b) will be described in conjunction with the operation of each block.

First, in order to transmit the above-described synchronizing symbol at the head of the frame before transmitting the pilot symbol, the control section 110 switches the input source of the input switching section 103 to the synchronizing code generating section 104. Thus, the synchronizing code is input to the IFFT section 106. The synchronizing code is converted into time axis signals by means of IFFT. The time domain signals are input to the GI adding section 107. The GI adding section 107 adds, to the signals, the part of the synchronizing code which has been converted into the time domain signals, as a guard interval. A D/A conversion section 108 then converts the resultant signals into analog signal. A radio transmission section 109 converts the analog signals into a frequency required for transmission. The radio transmission section 109 amplifies the resultant signals and then transmits the amplified signals.

Immediately after the input switching section 103 outputs the synchronizing code to the IFFT section 106, the control section 110 switches the input source to the gain adjusting section 102. At the same time, the control section 110 sets the gain adjusting section 102 and adjusts the amplitude of each subcarrier based on the amplitude of the pilot code input to the gain adjusting section 102.

The gain is set such that the attenuation characteristic of the auxiliary pilot subcarrier corresponds to the function for the hamming window. That is, in Expression (1) described above, $0 \leq x < 0.5\pi$ is assigned to the band of the auxiliary pilot subcarriers 305 added to the low-frequency end of the signal band. Furthermore, $0.5\pi \leq x < \pi$ is assigned to the band of the auxiliary pilot subcarriers 308 added to the high-frequency end of the signal band.

An amount of pilot symbol code output by the pilot code generating section 101 is input to the gain adjusting section 102 so that the amount corresponds to IFFT processing points. The pilot symbol code has the amplitude adjusted by the gain adjusting section 102, resulting in a signal with the spectrum shown in Figure 3(b). Same as the synchronizing symbol, the signal with the amplitude adjusted is then transmitted, as a pilot symbol, through the IFFT section 106, the GI adding section 107, the D/A section 108, and the radio transmission section 109. After the input switching section 108 inputs the pilot code with the amplitude adjusted to the IFFT section 106, the control section 110 switches the input to the modulation section 106. The control section 110 further sets the modulation section 106 in accordance with transmission control data, and continuously transmits data until the next frame is started. When the next frame is to be started, the control section 110 switches the input source of the input switching section 103 to the synchronizing code generating section 104 and repeats the above-described procedure.

Thus, the frame configuration shown in Figure 2 can be used to transmit the signal that uses the pilot symbol with the spectrum shown in Figure 3(b). Hence, when an impulse response is requested during propagation channel estimation following reception, a pilot symbol can be transmitted which allows power to concentrate more appropriately at the center of the waveform. Furthermore, compared to the conventional auxiliary pilot subcarrier, the present one allows the amplitude to be limited, thus effectively reducing power required for transmission to improve the power efficiency of the amplification section of the transmitter.

Now, the operation of the receiver will be described.

First, the radio reception section 121 receives and converts signals into base band signals. Subsequently, the A/D section 122 converts the base band signals into digital signals and then outputs the digital signals to the synchronizing and GI removing section 123. The synchronizing and GI removing section 123 first detects a frame synchronizing symbol in the input signal and inputs a frame start timing to the control section 134. Thereafter, the synchronizing and GI removing section 123 removes GIs from the succeeding reception signals to extract off OFDM symbols. The synchronizing and GI removing section 123 inputs the OFDM symbols to the FFT section 124. Any method may be used to detect synchronization in the frame synchronizing symbol. By way of example, the following method is possible. The correlation between the reception signal and the frame synchronizing symbol in terms of the time domain waveform during transmission is checked. A part of the waveform exhibiting the most significant correlation is determined to be the frame head. Then, the FFT section 124 converts the OFDM symbols rxtracted by the synchronizing and GI removing section into a frequency domain signal. The FFT section 124 then inputs the frequency domain signal to the switching section 125. Upon being notified of the frame start timing by the synchronizing and GI removing section 123, the control section 134 switches an output from the switching section 125 to the complex division section 126. The control section 134 thus inputs the received pilot symbol to the complex division section 126. Thereafter, for the succeeding data symbol, the control section 134 changes the output from the switching section 125 to the propagation channel equalizing section 132. The signal input to the complex division section 126 is subjected to a complex quotient divided by utilizing the code used to transmit the pilot symbol. The resultant signal is input to the IFFT section 128. The IFFT section 128 subjects the input signal to perform IFFT to transform the signals into time domain signals, that is, an impulse response. The auxiliary pilot subcarriers are added to the impulse response during transmission, and thus power concentrates more appropriately at the center of the impulse response. Thereafter, the time filter 129 removes the signals components other than effective ones from the impulse response. The second FFT section subjects the resultant signals to perform FFT to transform the signal into the frequency domain signal again. Thereafter, the auxiliary pilot subcarrier deleting section 131 sets the amplitude of a part of the auxiliary pilot subcarrier specified by the control section 134 to zero, thus obtaining a frequency response with noise components removed from the signal band.

After the frequency response is obtained, the propagation channel equalization section 132 equalizes the frequency of the data symbol output by the switching section 125 utilizing the frequency response output by the auxiliary pilot subcarriers deleting section 131. Subsequently, the demodulation section 133 performs a demodulation operation based on modulation information provided by the control section 134. Thus, reception data can be obtained.

As described above, in adding the auxiliary pilot subcarriers, the transmitter transmits the pilot symbol with the amplitude decreasing with increasing distance from the signal band. This enables the propagation channel to be more accurately estimated when the receiver carries out the DFT method involving the auxiliary pilot subcarriers.

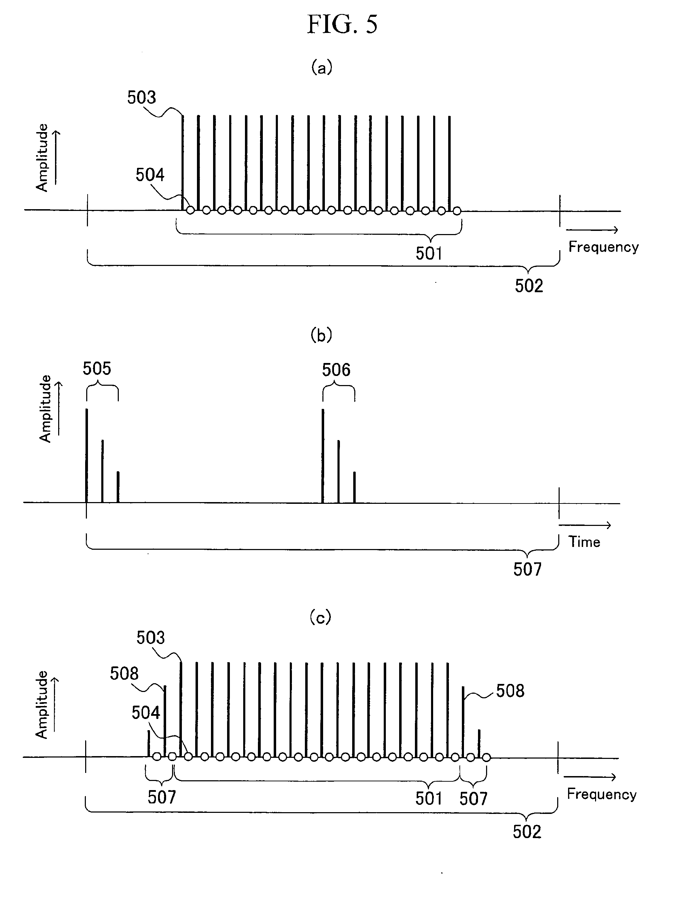

Furthermore, in the above-described present embodiment, the pilot subcarriers are consecutively arranged in all the subcarriers in the signal band of the pilot symbol. However, the present invention is also applicable to the case where the propagation channel is estimated based on the DFT method when pilot carriers called scattered pilots are discontinuously arranged. Figure 5(a) shows an example of a pilot symbol that utilizes scattered pilots. Here, by way of example, pilot carriers and null carriers are alternately arranged in the respective subcarriers. Reference numerals 501 and 502 denote a signal band and a DFT/IDFT processing band, respectively. Reference numerals 503 and 504 denote pilot carriers and null carriers, respectively. Figure 5(b) schematically shows an impulse response obtained by subjecting signals received through a propagation channel as a result of transmission of such a pilot symbol as described above, to a complex quotient divided by the code used for the transmission and then subjecting the resultant signals by IDFT. As shown by reference numerals 505 and 506, the same two impulse responses appear during an OFDM symbol period. One of the impulse responses, that is, the code 505, is extracted by the time filter and then subjected perform DFT. Then, a frequency response in the signal band can be determined. This processing is the DFT method itself.

At this time, if the signal band 501 used by the pilot symbol is a part of the DFT/IDFT processing band 502 as shown in Figure 5(a), the opposite ends of the signal band 501 may be distorted as described above.

To reduce the distortion, the auxiliary pilot subcarrier with the amplitude decreasing with increasing distance from the signal band is interposed at each of the opposite ends of the signal band. Figure 5(c) schematically shows the spectrum of the pilot symbol with the auxiliary pilot subcarriers interposed. An auxiliary pilot subcarrier 508 with the amplitude adjusted is added to a band 507 located at each of the opposite ends of the signal band 501. The auxiliary pilot subcarriers 508 are interposed at the same insertion intervals as those of the pilot subcarriers in the signal band 501. This allows two impulse responses to be obtained as shown in Figure 5(b).

When the propagation channel is estimated using the pilot symbol shown in Figure 5(c), then at the time of reception, the band containing the auxiliary pilot subcarriers may be processed based on the DFT method. Even if scattered pilots are used, the transmitter and receiver configured as shown in the example in Figure 1 can be used. Appropriately setting the gain adjusting section 102 during transmission enables generation of a pilot symbol that uses scattered pilots with dummy subcarriers of reduced power added. Also at the time of reception, the gain adjusting section 127 is set so as to delete data from the points set for the null carriers, while amplifying the points for the dummy subcarriers. Thereafter, the following operation is possible. The time filter 129 extracts one of the two impulse responses, and the FFT section 130 performs FFT. The auxiliary pilot subcarrier deleting section 131 deletes the signal except for the signal band.

Scattered pilots may be used in a MIMO (Multi Input Multi Output) system in order to multiplex a pilot symbol. In this case, the present embodiment may be similarly used.

Now, a second embodiment of the present invention will be described with reference to the drawings. As described above, the attenuation characteristic of the auxiliary pilot subcarrier depends on relevant parameters and the circumstances under which the auxiliary pilot subcarriers are used, and cannot be uniquely determined. The present embodiment illustrates an example of the configuration of communication apparatuses that control the attenuation characteristic of the auxiliary pilot subcarriers depending on the circumstances of the propagation channel between the communication apparatuses.

First, control performed in the communication apparatuses according to the present embodiment will be described in brief. The amount by which the propagation channel estimation accuracy is improved based on the DFT method is determined by the amount by which the time filter removes the signals. Hence, the amount of time required to pass signals through a time filter, that is, the time window period, is as small as possible and is normally adjusted to the assumed maximum delay time. However, if the propagation channel is estimated based on the DFT method when guard bands are provided, the estimation accuracy may disadvantageously be degraded unless somewhat excess time windows are provided around an arrival wave. To prevent the degradation of the channel estimation accuracy, and to ensure large improvement of the channel estimation accuracy, it is desired that the arrival waves should not be extended. In other words, it is desired that the lobe of impulse waveform is narrow. On the other hand, in a high SNR region, it is possible that the degradation of the channel estimation accuracy when the side lobe of the impulse response waveform are not efficiently suppressed because the level of degradation of the channel estimation based on the DFT method is relatively higher than the level of the noise. However, an increase in side lobe suppression amount widely increases the width of the main lobe, resulting in the need to provide an excessive time window width.

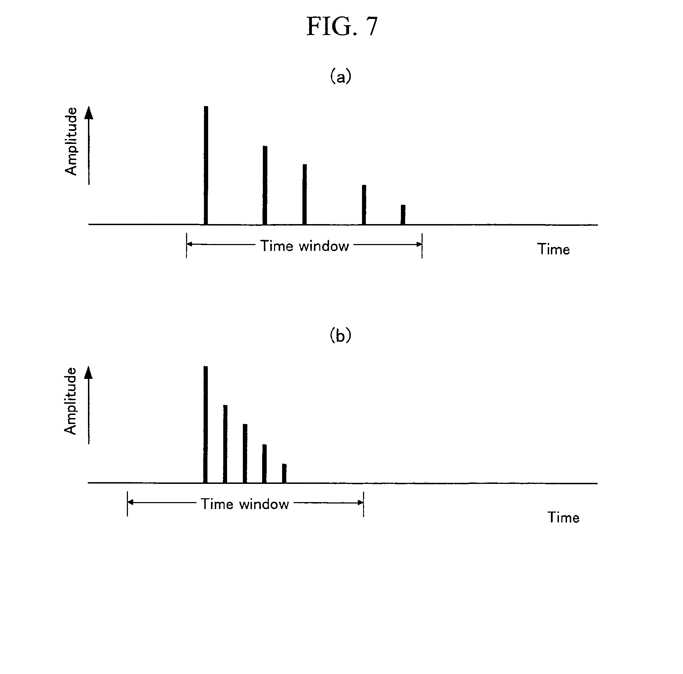

In the present embodiment, auxiliary pilot subcarrier adapted to reduce the main lobe width is normally added. When the SNR is high and the delay spread is small, auxiliary pilot subcarrier are added which are adapted to more significantly suppress the side lobes. This is schematically shown in Figure 7.

Figure 7(a) is a diagram showing the normal relationship between the arrival wave and the time window. The time window is set such that both an early arrival wave and a late arrival wave are accommodated in the time window and that the distance from the arrival wave to the end of the time window is short. Figure 7(b) is a diagram showing the relationship between the arrival wave and the time window observed when the SNR is high and when the delay spread is small. The time window end is set to long distance from the arrival wave when delay is small, the position of the time window is set to correspond to an earlier timing than that of the normal time window.

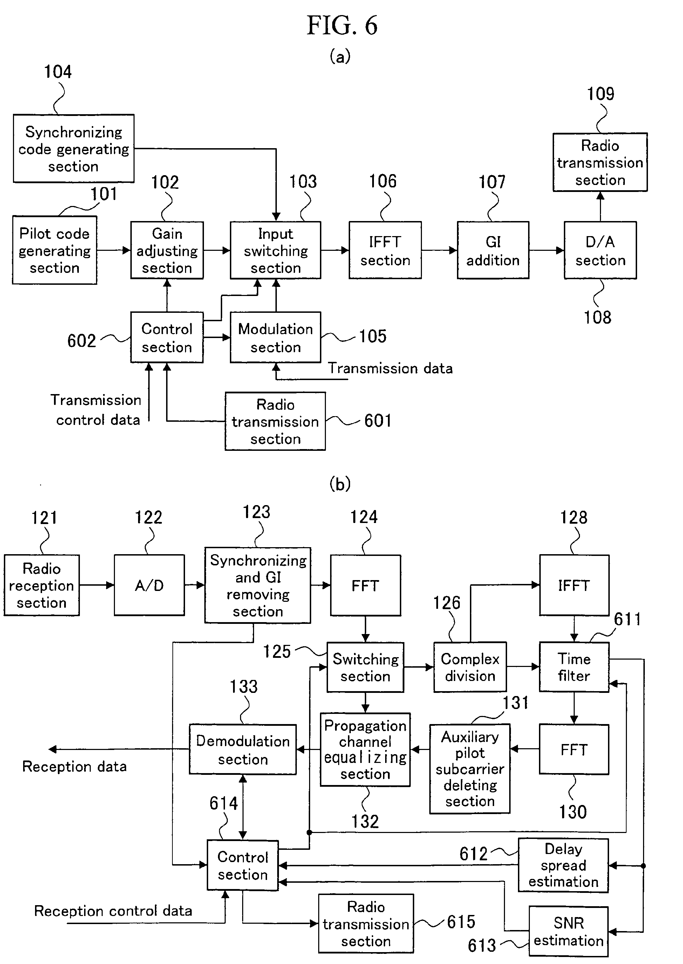

The communication apparatus operating as described above will be described with reference to Figure 6. Figure 6(a) shows a transmitting communication apparatus. Figure 6(b) shows a receiving communication apparatus. The basic operations of the communication apparatuses are the same as those of the transmission apparatus shown in Figure 1 (a) and the reception apparatus shown in Figure 1(b). The same reference numerals and names as those in Figure 1 are used in blocks involving the same operations. Blocks involving names and operations different from those in Figure 1 will be described below.

Reference numeral 601 denotes a radio reception section configured to receive SNR information and delay spread information transmitted by the receiving communication apparatus. Reference numeral 602 denotes a control section configured to perform an operation of varying the setting for the gain adjusting section 102 in accordance with information transmitted by the radio reception section 601, in addition to the operations of the control section 110 shown in Figure 1(a).

Reference numeral 611 denotes a time filter section capable of varying a period reduce or remove power of the period and which is included in a predetermined time domain for a time signals input under an instruction from the control section 614. Reference numeral 612 denotes a delay spread estimating section configured to estimate the delay spread utilizing an output from the time filter section 611. Reference numeral 613 denotes an SNR estimating section configured to estimate the SNR based on an input to and an output from the time filter section 611. Reference numeral 614 denotes a control section configured to perform, in addition to the operations of the control section 134 in Figure 1 (b), an operation of utilizing outputs from the delay spread estimating section 612 and the SNR estimating section 613 to notify the transmitting communication apparatus of delay spread information and SNR information on the propagation channel, through the radio transmission section 615, and an operation of utilizing the outputs from the delay spread estimating section 612 and the SNR estimating section 613 to vary the setting for the time filter section 611. Reference numeral 615 denotes the radio transmission section configured to estimate the delay spread information and the SNR information to the transmitting communication apparatus. Any scheme may be used for the radio transmission section 615 and the radio reception section 601 provided that the scheme allows information to be transmitted between the radio transmission section 615 and the radio reception section 601 with latency with which the radio transmission section 615 and the radio reception section 601 can follow variations in the propagation channel.

How the blocks operate to use the auxiliary pilot subcarriers in accordance with the above-described method will be described below.

The transmitting communication apparatus and the receiving communication apparatus initially operate on the assumption that the delay spread is large. That is, the gain adjusting section 102 and the time filter section 611 are set using an attenuation characteristic of the auxiliary pilot subcarriers which involves a reduced main lobe width. In the present embodiment, the function for the hamming window (Expression 1 shown above) is used as the attenuation characteristic of the auxiliary pilot subcarriers involving a reduced main lobe width. The function for the Blackman window (Expression 2 shown above) is used as the attenuation characteristic of the auxiliary pilot subcarriers involving an increased side lobe suppression amount. However, other functions and functions other than those derived from cosine functions may be used. For example, a function for a Kaiser window is expressed by:

[Expression 3]

$$w(x) = \frac{I_0\left\{\pi\alpha\sqrt{1-(2x-1)^2}\right\}}{I_0(\pi\alpha)} \quad (3)$$

(where $0 \le x < 0.5\pi$ or $0.5\pi \le x < \pi$, and $I_0$ denotes a zero-order modified Bessel function of the first kind)

Here, this function can be used as a function for a small main lobe when $\alpha$ has a small value and as a function for a large side lobe suppression amount when $\alpha$ has a large value.

The transmitting communication apparatus adds auxiliary pilot subcarriers for a reduced main lobe width to a pilot symbol and then transmits the pilot symbol. The receiving communication apparatus receives the pilot symbol transmitted by the transmitting communication apparatus, and estimates a propagation channel.

The pilot symbol received by the radio reception section 121 is converted into base band signals, which are then converted into digital signal by the A/D section 122. The synchronizing and GI removing section 123 first detects a frame synchronizing symbol in the input signals. The synchronizing and GI removing section 123 then inputs the frame start timing to the control section 614. Thereafter, the synchronizing and GI removing section 123 removes GIs from the succeeding part of the reception signal to extract OFDM symbols. The synchronizing and GI removing section 123 then inputs the OFDM symbols to the FFT section 124. The FFT section 124 converts the OFDM symbols obtained by the synchronizing and GI removing section 123 by removing the GIs from the reception signal, into frequency domain signals. The FFT section 124 then inputs the frequency domain signal to the switching section 125. Upon being notified of a frame start timing by the synchronizing and GI removing section 123, the control section 614 switches the output from the switching section 125 to the complex division section 126. The control section 614 thus inputs the received pilot symbol to the complex division section 126. Thereafter, for succeeding data symbols, the control section 614 changes the output from the switching section 125 to the propagation channel equalizing section 132. The data symbols are subjected to frequency equalization by the propagation channel equalizing section 132 based on a frequency response obtained. The resulting data symbols are then demodulated by the demodulation section 133.

On the other hand, the signal input to the complex division section 126 is subjected to a complex quotient divided by the code used for the transmission of the pilot symbol. The resultant signals are input to the IFFT section 128. The IFFT section 128 executes an IFFT process to transform the input signal into time domain signal, that is, an impulse response. Thereafter, the time filter 611 set at the normal time window position shown in Figure 7(a) removes the signal components other than effective ones from the impulse response. The second FFT section subjects the resultant impulse response to perform FFT to transform the response into frequency domain signal again. Thereafter, the auxiliary pilot subcarrier deleting section 131 sets the amplitude of a part of the auxiliary pilot subcarriers specified by the control section 614 to zero. Thus, a frequency response with noise components removed from the signal band is obtained.

The frequency response is determined as described above. The delay spread estimating section 612 further estimates the delay spread. In this case, various indices may be used. In the present embodiment, the delay time of the latest effective delay wave is used as delay spread information. Various methods may be used to determine effective delay waves. By way of example, the latest time is used which is included in the output signal from the time filter section 611 and which involves an amplitude equal to or larger than a predetermined threshold. Moreover, the SNR estimating section 612 estimates the SNR. Various methods may also be used to estimate the SNR. In the present embodiment, the SNR is calculated based on noise power considered to be a value obtained by subtracting the total power of the signal output by the time filter section 611 from the total power of the signal input to the time filter section 611, and signal power considered to be the total power of the signal output by the time filter section 611.

The delay spread information and SNR information obtained is input to the control section 614. The control section 614 determines whether or not the delay spread is equal to or smaller than a predetermined threshold and whether or not the SNR is higher than a predetermined threshold, that is, whether or not the position of the time window shown in Figure 7(b) corresponds to an appropriate propagation channel. Upon determining that the position of the time window corresponds to an appropriate propagation channel, the control section 614 sets the time filter 611 at the window position shown in Figure 7(b). Otherwise, the control section 614 sets the time filter 611 at the window position shown in Figure 7(a). At the same time, the control section 614 communicates the delay spread information and SNR information to the transmitting communication apparatus through the radio transmission section 615.

In the transmitting communication apparatus, the control section 602 monitors, through the radio reception section 601, the delay spread information and SNR information transmitted by the receiving communication apparatus. The control section 602 thus determines whether or not auxiliary pilot subcarriers with a large side lobe suppression amount exhibit an appropriate attenuation characteristic, that is, whether or not the delay spread is equal to or smaller than the predetermined threshold and whether or not the SNR is higher than the predetermined threshold. If the auxiliary pilot subcarriers with a large side lobe suppression amount exhibit the appropriate attenuation characteristic, the control section 602 sets a value for the gain adjusting section 102 such that the attenuation characteristic of the auxiliary pilot subcarriers offers a large side lobe suppression amount. Otherwise, the control section 602 sets a value for the gain adjusting section 102 such that the attenuation characteristic of the auxiliary pilot subcarriers offers a small main lobe width.

The blocks operate as described above. Thus, communication can be performed using a pilot symbol with auxiliary pilot subcarriers suitable for the status of the propagation channel added.

In the present embodiment, both the amount of noise and delay spread in the propagation channel are used as indices according to which the attenuation characteristic of the auxiliary pilot subcarriers is switched. However, either one of the amount of noise and the delay spread may be used as an index. Alternatively, both indices may be weighted. An attenuation characteristic for a large side lobe suppression amount may be set when the delay spread is small, whereas an attenuation characteristic for a reduced main lobe width may be set when the delay spread is large. Alternatively, an attenuation characteristic for a reduced main lobe width may be set when the amount of noise is large, whereas an attenuation characteristic for a large side lobe suppression amount may be set when the amount of noise is small. When only the amount of noise is used for the determination, since some delay waves involve low noise but a long delay time, the receiving communication apparatus may change the time window position and increase the time window width.

Furthermore, the present embodiment has been described taking, as an example, the method in which information on the propagation channel is obtained based on the report from the receiver. However, if time division duplex (TDD) is used for communication, the same propagation channel is used both for transmission and for reception. Thus, the transmitter may use propagation channel information measured at the time of reception as propagation channel information for transmission. This eliminates the need to obtain information from the receiver. In this case, the transmission and reception of the propagation channel information may be omitted.

Now, a communication technique according to a third embodiment of the present invention will be described with reference to the drawings.

In the first and second embodiments, before a pilot symbol with auxiliary pilot subcarriers added is transmitted, the spectrum is corrected to improve the propagation channel estimation accuracy and the transmission power efficiency.

In the present embodiment, a method for exerting effects similar to those of the first and second embodiments on the receiver side if auxiliary pilot subcarriers according to the conventional method are added, that is, auxiliary pilot subcarriers with a rectangular spectrum are added. This method fails to improve the transmission power efficiency but improves the propagation channel estimation accuracy equivalently to the methods shown in the first and second embodiments. The transmission apparatus may be configured similarly to the conventional example shown in Figure 11(a).

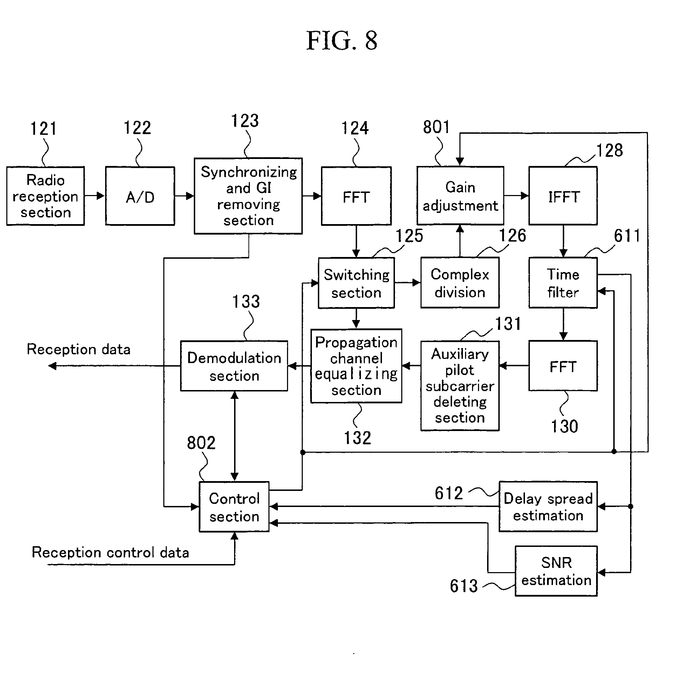

Figure 8 is a function block diagram showing an example of the configuration of a receiver according to the present embodiment. The basic configuration of the receiver is similar to that of the receiving communication apparatus described in the second embodiment. The same reference numerals and names as those in the second embodiment are used for blocks configured to operate similarly to those of the second embodiment. The present embodiment differs from the second embodiment in that no radio transmission section configured to transmit delay spread information and SNR information is present and that a gain adjusting section 801 is located before the IFFT section 128 to correct the amplitude of the band of auxiliary pilot subcarriers; the control section 802 needs to additionally control the gain adjusting section 801.

In the first and second embodiments, the spectrum of auxiliary pilot subcarriers is corrected during transmission. The present embodiment exerts effects similar to those of the first and second embodiments by transmitting auxiliary pilot subcarriers with a flat spectrum during transmission, and correcting the spectrum of the auxiliary pilot subcarriers at the time of reception. The operation of each of the blocks will be described below.

A pilot symbol received by the radio reception section 121 is converted into base band signals, which are then converted into digital signals by the A/D section 122. The synchronizing and GI removing section 123 first detects a frame synchronizing symbol in the input signals. The synchronizing and GI removing section 123 then inputs the frame start timing to the control section 614. Thereafter, the synchronizing and GI removing section 123 removes GIs from the succeeding part of the reception signal to extract OFDM symbols. The synchronizing and GI removing section 123 then inputs the OFDM symbols to the FFT section 124. The FFT section 124 converts the OFDM symbols obtained by the synchronizing and GI removing section 123 by removing the GIs from the reception signal, into frequency domain signals. The FET section 124 then inputs the frequency domain signal to the switching section 125. Upon being notified of a frame start timing by the synchronizing and GI removing section 123, the control section 802 switches the output from the switching section 125 to the complex division section 126. The control section 802 thus inputs the received pilot symbol to the complex division section 126. Thereafter, for succeeding data symbols, the control section 802 changes the output from the switching section 125 to the propagation channel equalizing section 132. The data symbols are subjected to frequency equalization by the propagation channel equalizing section 132 based on a frequency response obtained. The resulting data symbols are then demodulated by the demodulation section 133.

On the other hand, the signal input to the complex division section 126 are subjected to a complex quotient divided by the code used for the transmission of the pilot symbol. The resultant signals are input to the gain adjusting section 801. The gain adjusting section 801 corrects the spectrum of auxiliary pilot subcarriers. The attenuation characteristic of the auxiliary pilot subcarriers is set such that the main lobe is normally narrow and that if the SNR is high and the delay spread is small, the side lobe suppression amount is increased, as in the case of the second embodiment. In the present embodiment, the complex division process is followed by the amplitude correcting process. However, this order may be changed because both processes have linearity for the subcarriers.

Furthermore, in the present embodiment, the auxiliary pilot subcarriers added by the transmitter have a flat spectrum. However, if the transmitter does not offer a flat spectrum, the setting may be such that the main lobe is narrowed or the side lobe suppression amount is increased based on the combination of the spectrum from the transmitter and the correction in the receiver.

The signals with the amplitude of band of the auxiliary pilot subcarriers corrected are input to the IFFT section 128. The IFFT section 128 subjects the input signal to perform IFFT to transform the signals into time domain signals, that is, an impulse response. Thereafter, the time filter 611 removes the signal components other than effective ones from the impulse response. The second FFT section 130 subjects the resultant impulse response to perform FFT to transform the impulse response into frequency domain signal again. Thereafter, the auxiliary pilot subcarrier deleting section 131 sets the amplitude of a part of the auxiliary pilot subcarrier specified by the control section 134 to zero. Thus, a frequency response with noise components removed from the signal band is obtained. The SNR and the delay spread information are initially unavailable. The control section 802 sets the gain adjusting section 801 and the time filter section 611 so as to set the attenuation characteristic of the auxiliary pilot subcarriers such that the main lobe is narrowed.

The frequency response is determined as described above. The delay spread estimating section 612 further estimates the delay spread. In this case, various indices may be used. In the present embodiment, the delay time of the latest effective delay wave is used as delay spread information. Various methods may be used to determine effective delay waves. By way of example, the latest time is used which is included in the output signals from the time filter section 611 and which involves an amplitude equal to or larger than a predetermined threshold. Moreover, the SNR estimating section 612 estimates the SNR. Various methods may also be used to estimate the SNR. In the present embodiment, the SNR is calculated based on noise power considered to be a value obtained by subtracting the total power of the signals output by the time filter section 611 from the total power of the signals input to the time filter section 611, and signal power considered to be the total power of the signasl output by the time filter section 611.

The delay spread information and SNR information obtained is input to the control section 802. The control section 802 determines whether or not the delay spread is equal to or smaller than a predetermined threshold and whether or not the SNR is higher than a predetermined threshold, that is, whether or not a large side lobe suppression amount is permissible. Upon determining that a large side lobe suppression amount is permissible, the control section 801 sets the time filter section 611 at the window position shown in Figure 7(b) so that the auxiliary pilot subcarriers offer a large side lobe suppression amount. Upon determining that a large side lobe suppression amount is not permissible, the control section 801 sets the time filter 611 at the window position shown in Figure 7(a) so that the auxiliary pilot subcarriers offer a narrowed main lobe.

The blocks operate as described above. Thus, estimation accuracy can be achieved which is equivalent to that in the case of a pilot symbol with auxiliary pilot subcarriers suitable for the status of the propagation channel added. The present embodiment fails to improve the transmission power efficiency of the transmitter but advantageously enables achievement of estimation accuracy equivalent to that in the case of a pilot symbol with added auxiliary pilot subcarriers corresponding to the status of the propagation channel without the need for feedback to the transmitter.

Furthermore, in the description of the present embodiment, the correction of the spectrum of auxiliary pilot subcarriers and the time window position of the time filter are varied in accordance with the delay spread information and SNR of the propagation channel. That is, the method for achieving estimation accuracy equivalent to that in the second embodiment has been described. However, when the auxiliary pilot subcarriers are subjected to specific spectrum correction independently of the delay spread information and SNR of the propagation channel, estimation accuracy equivalent to that shown in the first embodiment can be achieved.

Industrial Applicability

The present invention can be utilized for communication apparatuses.

**Claims**

1.  A radio communication system in which an OFDM transmission apparatus adds auxiliary pilot subcarriers to outsides of a signal band of a pilot symbol and

in which an OFDM reception apparatus carries out propagation channel estimation involving the auxiliary pilot subcarriers, in accordance with a time window method, the radio communication system comprising:

a gain adjusting section configured to carry out attenuation in accordance with an attenuation characteristic adapted to reduce amplitudes of the subcarriers with increasing distance from the signal band.

2. A radio communication system in which an OFDM transmission apparatus adds auxiliary pilot subcarriers to an outside of a signal band of a pilot symbol and

in which an OFDM reception apparatus receives the pilot symbol with the auxiliary pilot subcarriers added;
subjects the received pilot symbol to a time/frequency conversion;
subjects the signal resulting from the time/frequency conversion to a complex quotient divided by a code used for transmission;
subjects the signals resulting from the complex division to a frequency/time conversion;
executes time filter processing by reducing or removing an amplitude of a section of the signal resulting from the frequency/time conversion; and
then subjects the signals resulting from the time filter processing to a time/frequency conversion to determine a frequency response, the radio communication system comprising:

a gain adjusting section configured to, for at least one of the auxiliary pilot subcarriers added by the transmission apparatus and bands of the signals resulting from the complex division, the bands comprising the added auxiliary pilot subcarriers,
carry out attenuation in accordance with an attenuation characteristic adapted to reduce an amplitudes of the auxiliary pilot subcarriers with increasing distance from the signal band.

3. The radio communication system according to Claim 1 or Claim 2, wherein the attenuation characteristic is a cosine function.

4. The radio communication system according to Claim 1 or Claim 2, wherein the attenuation characteristic is a function for a hamming window.

5. The radio communication system according to Claim 1 or Claim 2, wherein the attenuation characteristic is varied in accordance with information on a propagation channel.

6. The radio communication system according to Claim 2, wherein at least one of start position and period length of the periodsubjected to the time filter processing is varied depending on a status of a propagation channel.

7. The radio communication system according to Claim 5 or Claim 6, wherein the status of the propagation channel is the amount of noise.

8. The radio communication system according to Claim 5 or Claim 6, wherein the status of the propagation channel is a delay spread.

9. The radio communication system according to Claim 5, wherein if the propagation channel involves little noise, the attenuation characteristic is a large side lobe suppression amount.

10. The radio communication system according to Claim 5, wherein if the delay spread of the propagation channel is small, the attenuation characteristic is a large side lobe suppression amount.

11. An OFDM transmission apparatus comprising:

a pilot code generating section configured to, during generation of a pilot symbol, generate a pilot code comprising auxiliary pilot subcarriers in at least a part of a band except a signal band; and
a gain adjusting section configured to attenuate amplitudes of the auxiliary pilot subcarriers with increasing distance from the signal band.

12. The OFDM transmission apparatus according to Claim 11, further comprising a control section configured to control an attenuation characteristic of the gain adjusting section in accordance with information on a propagation channel.

**13.** An OFDM reception apparatus comprising:

a first DFT section configured to receive a pilot symbol with auxiliary pilot subcarriers added and subject the received pilot symbol to a time/frequency conversion;

a complex division section configured to subject the signal resulting from the time/frequency conversion to a complex quotient divided by a code used for transmission;

a gain adjusting section configured to carry out correction such that an amplitude of a band of the signal resulting from the complex division which band comprises the added auxiliary pilot subcarriers is attenuated with increasing distance from a signal band;

an IDFT section configured to subject the signals resulting from the amplitude correction to a frequency/time conversion;

a time filter section configured to execute time filter processing by reducing or removing an amplitude of a section of the signals resulting from the frequency/time conversion; and

a second DFT section configured to subject the signals resulting from the time filter processing to a time/ frequency conversion.

**14.** The OFDM reception apparatus according to Claim 13, further comprising a control section configured to control an attenuation characteristic of the gain adjusting section in accordance with information on a propagation channel.

**15.** The OFDM reception apparatus according to Claim 13, further comprising a control section configured to vary at least one of start position and period width of the period during the time filtering in accordance with the information on the propagation channel.

**16.** A communication method in which an OFDM transmission apparatus add auxiliary pilot subcarriers to outside of a signal band of a pilot symbol and in which an OFDM reception apparatus carries out propagation channel estimation involving the auxiliary pilot subcarriers, in accordance with a time window method, the communication method comprising:

a step of carrying out attenuation in accordance with an attenuation characteristic adapted to reduce an amplitude of the subcarriers with increasing distance from the signal band.

FIG. 1

(a)

(b)

# FIG. 2

(a)

(b)

# FIG. 3

(a)

(b)

(c)

# FIG. 4

(a)

(b)

# FIG. 5

(a)

(b)

(c)

# FIG. 6

(a)

(b)

# FIG. 7

(a)

(b)

## FIG. 8

# FIG. 9

(a)

Time

(b)

Time

(c)

Frequency

(d)

Frequency

(e)

Frequency

# FIG. 10

(a)

Amplitude

1003

Frequency

1001

1002

(b)

Error

1004

Frequency

(c)

1005    1003    1005

Amplitude

Frequency

(d)

Error

1006

1001

Frequency

# FIG. 11

(a)

1101

Synchronizing code generating section

1102

Pilot code generating section

1103

Input switching section

1104

IFFT section

1105

GI addition

1107

Radio transmission section

1106

D/A section

602

Control section

Modulation section

1108

Transmission control data

Transmission data

(b)

1111

Radio reception section

1112

A/D

1113

Synchronizing and GI removing section

1114

FFT

1115

Switching section

1116

Complex division

1117

IFFT

1118

Time filter

1119

FFT

1120

Auxiliary pilot subcarrier deleting section

1121

Propagation channel equalizing section

1122

Demodulation section

1123

Control section

Reception data

26

## INTERNATIONAL SEARCH REPORT

| | International application No. |
|---|---|
| | PCT/JP2008/065370 |

A. CLASSIFICATION OF SUBJECT MATTER
*H04J11/00*(2006.01)i, *H04B7/005*(2006.01)i

According to International Patent Classification (IPC) or to both national classification and IPC

B. FIELDS SEARCHED

Minimum documentation searched (classification system followed by classification symbols)
H04J11/00, H04B7/005

Documentation searched other than minimum documentation to the extent that such documents are included in the fields searched
    Jitsuyo Shinan Koho        1922-1996    Jitsuyo Shinan Toroku Koho    1996-2008
    Kokai Jitsuyo Shinan Koho   1971-2008    Toroku Jitsuyo Shinan Koho    1994-2008

Electronic data base consulted during the international search (name of data base and, where practicable, search terms used)
    IEEE, CiNii

C. DOCUMENTS CONSIDERED TO BE RELEVANT

| Category* | Citation of document, with indication, where appropriate, of the relevant passages | Relevant to claim No. |
|---|---|---|
| A | JP 2007-74351 A  (Sharp Corp.), 22 March, 2007 (22.03.07), Full text; all drawings (Family: none) | 1-16 |
| A | WO 2006/19709 A1  (QUALCOMM INC.), 23 February, 2006 (23.02.06), Par. Nos. [0012], [0065] to [0068]; Fig. 10 & JP 2008-507902 A      & US 2006/0018393 A1 & EP 1774740 A         & CA 2574796 A & NO 20070901 A        & CN 101023645 A | 1-16 |
| P,A | JP 2007-329588 A  (Fujitsu Ltd.), 20 December, 2007 (20.12.07), Par. Nos. [0029] to [0033]; Figs. 1, 2 & US 2007/0280365 A1     & EP 1868336 A2 & KR 10-2007-0116709 A  & CN 101087290 A | 1-16 |

☒ Further documents are listed in the continuation of Box C.     ☐ See patent family annex.

| | |
|---|---|
| *     Special categories of cited documents: | "T"   later document published after the international filing date or priority date and not in conflict with the application but cited to understand the principle or theory underlying the invention |
| "A"   document defining the general state of the art which is not considered    to be of particular relevance | |
| "E"   earlier application or patent but published on or after the international filing date | "X"   document of particular relevance; the claimed invention cannot be considered novel or cannot be considered to involve an inventive step when the document is taken alone |
| "L"   document which may throw doubts on priority claim(s) or which is cited to establish the publication date of another citation or other special reason (as specified) | "Y"   document of particular relevance; the claimed invention cannot be considered to involve an inventive step when the document is combined with one or more other such documents, such combination being obvious to a person skilled in the art |
| "O"   document referring to an oral disclosure, use, exhibition or other means | |
| "P"   document published prior to the international filing date but later than the priority date claimed | "&"   document member of the same patent family |

| Date of the actual completion of the international search | Date of mailing of the international search report |
|---|---|
| 04 November, 2008 (04.11.08) | 11 November, 2008 (11.11.08) |

| Name and mailing address of the ISA/ | Authorized officer |
|---|---|
| Japanese Patent Office | |
| Facsimile No. | Telephone No. |

Form PCT/ISA/210 (second sheet) (April 2007)

**INTERNATIONAL SEARCH REPORT**

| International application No. |
|---|
| PCT/JP2008/065370 |

C (Continuation).    DOCUMENTS CONSIDERED TO BE RELEVANT

| Category* | Citation of document, with indication, where appropriate, of the relevant passages | Relevant to claim No. |
|---|---|---|
| P,A | WO 2007/139026 A1  (Sharp Corp.),<br>06 December, 2007 (06.12.07),<br>Full text; all drawings<br>(Family: none) | 1-16 |
| P,A | Hideo NANBA, Kazunari YOKOMAKURA, Shinpei TO,<br>Yasuhiro HAMAGUCHI, Minoru KUBOTA, "OFDM ni<br>Okeru Teidenryoku Hojo Pilot o Mochiita<br>Denpanro Suitei Seido no Kaizen Hoho",<br>Proceedings of the 2007 Society Conference of<br>IEICE 1, 29 August, 2007 (29.08.07), page 406,<br>B-5-84 | 1-16 |

Form PCT/ISA/210 (continuation of second sheet) (April 2007)